# EUROPÄISCHE PATENTSCHRIFT

(11) **EP 4 212 296 B1**
(45) Veröffentlichungstag und Bekanntmachung des Hinweises auf die Patenterteilung: **06.11.2024**
(21) Anmeldenummer: 22209218.1
(22) Anmeldetag: 23.11.2022
(51) Int. Cl.: B27G 13/00, B27G 13/02, B27G 13/04, B23C 5/10, B23C 5/00

(54) **WERKZEUG, INSBESONDERE FRÄSER, ZUR ROTIERENDEN BEARBEITUNG VON HOLZ SOWIE VON WERKSTOFFEN MIT ÄHNLICHEN PHYSIKALISCHEN EIGENSCHAFTEN WIE HOLZ**
TOOL, IN PARTICULAR MILLING CUTTER, FOR THE ROTARY MACHINING OF WOOD AND MATERIALS WITH SIMILAR PHYSICAL PROPERTIES AS WOOD
OUTIL, EN PARTICULIER FRAISE, POUR L'USINAGE ROTATIF DE BOIS ET DE MATÉRIAUX AYANT DES PROPRIÉTÉS PHYSIQUES SIMILAIRES COMME LE BOIS

(30) Priorität: 26.11.2021 CH 0706082021
(43) Veröffentlichungstag der Anmeldung: 19.07.2023
(73) Patentinhaber: Oertli Werkzeuge AG, 8181 Höri bei Bülach (CH)
(72) Erfinder: Ehrle, Bruno, 8200 Schaffhausen (CH); Ostojic, Zoran, 8215 Hellau (CH)
(74) Vertreter: Swisspat Riederer Hasler Patentanwälte AG

(56) Entgegenhaltungen:
- EP-A1- 3 795 316
- US-A1- 2008 170 917
- US-B1- 7 708 038

## Beschreibung

Die Erfindung betrifft ein Werkzeug, insbesondere Fräser, zur rotierenden Bearbeitung von Holz sowie Werkstoffen mit ähnlichen physikalischen Eigenschaften wie Holz gemäss dem Oberbegriff von Anspruch 1.

### Stand der Technik

Im Holzbau werden für die Bearbeitung im Elementbau Bohrfräser mit einer Schnittlänge von bis zu 410mm verwendet. Damit wird eine Vielzahl von Bearbeitungen an den Holzelementen durchgeführt. Neben den Standard Füge- und Falzbearbeitungen muss das Werkzeug auch in der Lage sein, Löcher zirkular zu Bohren (Helix) oder tiefe Nuten oder Taschen in einer Rampe in die Holz-Elemente einzufräsen. Dieses axiale Eintauchen ins Holz bedingt auf der Stirnseite eine Schneidengeometrie, welche «Zahn über Mitte» geschliffen bzw. platziert ist. Das heisst, dass mindestens ein Schneidezahn sich im Zentrum des Fräsers ein paar Zehntelmillimeter über der Mitte befinden muss.

Solche Werkzeuge werden in einer Monoblock-Bauweise (aus einem Stück) ausgeführt.

Das heisst, der Werkzeugkörper aus einer Stahllegierung, auf welchem Wechselschneiden montiert sind, ist von der Spindel-Schnittstelle (üblicher Weise eine HSK-Schnittstelle, d.h. Werkzeugschnittstelle mit Hohlschaftkegel) bis zu den stirnseitigen Schneiden aus einem Stück gefertigt. Das bedeutet, dass für jede Spindel-Schnittstelle (in der Regel HSK) ein komplettes Werkzeug benötigt ist, da dieses als Monoblock hergestellt ist.

Nachteilig ist dabei, dass es bei einer Werkzeugkollision oder starker Abnutzung ein komplett neues Werkzeug braucht. Die Herstellung eines solchen Monoblock-Werkzeugs bedingt lange Bearbeitungszeiten und ist somit teuer, da das ganze Teil aus einer hochfesten Stahllegierung besteht. Durch das hohe Gewicht eines solchen Werkzeugs können im Betrieb nur niedrige Einsatzdrehzahlen angewendet werden. Die Ursache hierfür ist eine zu hohe Spindellagerbelastung infolge eines hohen Kraft-Hebelarm-Faktors, welcher durch fertigungsbedingte Exzentrizitäten im Zusammenhang mit der Spindeldrehzahl auf die Spindellager einwirkt (Unwuchtskomponente). Eine höhere Spindellagerbelastung wirkt sich nachteilig auf ihre Lebensdauer aus und zieht vorzeitige, teure Spindelrevisionen nach sich. Diesem Umstand kann man nur entgegenwirken, indem man die Betriebsdrehzahl für diese Werkzeugtypen reduziert. Ein höheres Werkzeuggewicht reduziert aber gleichzeitig auch die Eigenfrequenz von der Baugruppe Werkzeug, Werkzeugspindel mit ihrer gesamten aufgehängten Struktur. Dadurch besteht die Gefahr, dass eine reduzierte Einsatzdrehzahl auf die Eigenfrequenz dieser Struktur trifft, was ein zusätzliches Gefahrenpotential darstellt. Des Weiteren ergeben tiefere Einsatzdrehzahlen wegen dem Reibungsverlust infolge der tiefen Schnittgeschwindigkeit auch tiefere Standzeiten. Als Folge davon können nur tiefe Vorschübe eingestellt werden, was sich wiederum in einer schlechten Produktivität äussert.

Ein weiterer Nachteil ist die ungünstige Schnittgeometrie (Spanwinkel) an der Stirnseite, da die «Zahn über Mitte» Problematik mit einer Profilschneiden-Lösung bewerkstelligt wird. Mit diesem Schneidentyp ist man auf der Stirnseite des Fräsers für eine Schneidenstellung mit «Zahn über Mitte» in der Wahl der Schnittgeometrie äusserst eingeschränkt. Mit einer Profilschneiden-Lösung in diesem Bereich ergeben sich im Übergang von der Stirnschneide zur Umfangsschneide praktisch keine Spanwinkel mehr. Dadurch ist eine ausrissfreie Bearbeitung des fasrigen Holzwerkstoffes in diesem Werkzeugbereich praktisch nicht mehr möglich. Dies führt zu umständlichen Nacharbeiten am bearbeiteten Werkstück, was zeit- und kostenaufwändiger ist. Ausserdem nutzen sich die Schneiden in diesem Bereich durch höhere Reibungskräfte schneller ab, was zu kürzeren Wartungszyklen führt. Im Gegensatz zu einer Wendeschneiden-Lösung hat eine Profilschneiden-Lösung neben der ungünstigen Schnittgeometrie auch nur eine Schnittkante, was die Wartungsfreundlichkeit weiter verschlechtert.

EP 1 442 852 offenbart einen Walzenfräser zur Holzbearbeitung mit einem Walzenkörper, an dessen Umfang mindestens zwei mit gleichen Umfangsabständen angeordnete axiale Reihen von Wendeschneiden angeordnet sind, die jeweils in Gestalt einer steilen Schraubenwendel verlaufen. Die einzelnen Wendeschneiden der in Umfangsrichtung aufeinanderfolgenden Wendeschneidenreihen sind axial auf Lücke positioniert und so bemessen, daß sich die auf Lücke stehenden einzelnen Wendeschneiden der axial aufeinanderfolgenden Wendeschneidenreihen axial mit ihren wirksamen Schneiden überdecken. Im Walzenkörper sind jeweils den Wendeschneidreihen zugeordnete Spannuten vorgesehen.

Der Walzenfräser besteht aus lösbar miteinander verbundenen axialen Segmenten gleicher oder unterschiedlicher Länge, welche zu einer variablen axialen Gesamtlänge aufbaubar sind. Die einzelnen axialen Segmente weisen an ihren Stirnenden komplementäre Formschlussprofile auf, die eine drehwinkelmäßige relative Positionierung der aneinandergrenzenden axialen Segmente derart formschlüssig festlegen, daß die Wendeschneidenreihen der aneinandergrenzenden axialen Segmente fließend ineinander übergehen.

Sowohl die amerikanische Patentanmeldung US 2011/103903 A1 als auch das chinesische Gebrauchsmuster CN 201 644 894 U offenbaren mehrteilige Werkzeuge für die Metallbearbeitung. Werkzeuge für die Metallbearbeitung besitzen keine Schneiden an der Stirnseite und können daher nicht als Bohrer eingesetzt werden. Es bestehen also bei solchen Werkzeugen ganz andere Anforderungen als bei Werkzeugen für die Holzbearbeitung. Das natürlich gewachsene Holz ist mit seiner fasrigen und zellenartigen Struktur ein inhomogener und anisotroper Werkstoff. Technische Merkmale von Werkzeugen für die Metallbearbeitung können deshalb nicht auf solche für die Holzbearbeitung übertragen werden. US 2008/170917 A1 offenbart die Präambel des Hauptanspruches.

### Aufgabe der Erfindung

Es ist deshalb ein Ziel der vorliegenden Erfindung, ein Werkzeug insbesondere einen Fräser für eine Werkzeugmaschine für die Holzbearbeitung zur Verfügung zu stellen, das die eingangs erwähnten Nachteile nicht aufweist. Insbesondere ist es ein Ziel, ein Werkzeug bereitzustellen, das kostengünstig hergestellt und in seiner Ausführung äusserst flexibel aufgebaut ist. Ein weiteres Ziel dieser Erfindung ist, ein Werkzeug mit modularem Aufbau zur Verfügung zu stellen, damit einerseits für die verschiedenen Schnittstellen (in der Regel HSK) zum Spindelantrieb nicht immer ein komplettes Werkzeug beschafft werden muss. Noch ein Ziel ist, ein Leichtbau-Werkzeug zur Verfügung zu stellen, mit dem die Spindelbelastung deutlich verringert werden kann. Eine weitere Aufgabe dieser Erfindung ist, ein universales Fräswerkzeug zur Verfügung zu stellen, welches alle gängigen Fräsbearbeitungen mit hoher Bearbeitungsqualität als auch Produktivität bewerkstelligen kann. Dazu gehört neben dem Fälzen und Fügen auch das Bohrfräsen. Beim Bohrfräsen wird neben dem Eintauchen ins Material mittels der Z-Achse noch mit mindestens einer weiteren Achse (X- und/oder Y-Achse) gleichzeitig verfahren (Helix oder Rampe). Um dies bewerkstelligen zu können, muss die Schnittgeometrie der stirnseitigen Wendeschneiden speziell ausgerichtet werden. Darum ist ein weiteres Ziel dieser Erfindung, die anspruchsvolle Bearbeitungszone an der Stirnseite der Bohrkrone und im speziellen beim Übergang von der Stirnseite zur Umfangseite (zylindrische Peripherie) zu verbessern.

### Beschreibung

Erfindungsgemäss werden die vorerwähnten Ziele durch die Merkmale der unabhängigen Ansprüche 1 und 11 realisiert. Vorteilhafte Weiterbildungen sind in den Unteransprüchen definiert.

Erfindungsgemäss ist das Werkzeug dadurch charakterisiert, dass dieses einen zweiteiligen Werkzeugkörper besitzt, nämlich einen ersten und einen zweiten Werkzeugkörper, wobei der erste Werkzeugkörper eine axiale Durchgangsbohrung aufweist für die Aufnahme einer Aufspannwelle, und der zweite Werkzeugkörper als Bohrkrone mit zusätzlichen stirnseitigen Schneidenauflagen ausgebildet und drehfest mit dem ersten Werkzeugkörper und der Aufspannwelle verbind- und auswechselbar ist. Das erfindungsgemässe Werkzeug hat den Vorteil, dass dieses flexibel und modular aufgebaut ist und die stark beanspruchte Bohrkrone nach einem allfälligen Crash oder bei starker Abnutzung einfach und kostengünstig ausgetauscht werden kann. Durch den modularen Aufbau kann die HSK-Aufspannwelle für die verschiedenen HSK-Schnittstellen beim Spindelantrieb ausgetauscht werden.

Vorteilhaft ist die Bohrkrone deutlich kürzer als der erste Werkzeugkörper und weist insbesondere eine Länge zwischen ungefähr 48 und 78mm auf, währenddem der erste Werkzeugkörper eine Länge zwischen ungefähr 150 und 380mm hat. Dabei kann die Bohrkrone kürzer ausfallen, wenn diese aus Edelstahl hergestellt ist, und etwas länger, wenn sie aus Aluminium hergestellt ist. Die Länge des ersten Werkzeugkörpers kann über einen grösseren Bereich variieren. Relativ zum ersten Werkzeugkörper beträgt die Länge der Bohrkrone vorzugsweise zwischen ungefähr einem Drittel und der Hälfte der Länge des ersten Werkzeugkörpers.

Gemäss einer besonders bevorzugten Ausführungsform ist das Werkzeug als Leichtbau-Werkzeug ausgeführt, wobei der erste Werkzeugkörper aus einem Leichtmetall, insbesondere Aluminium, oder einem faserverstärkten Kunststoff und die Bohrkrone aus Aluminium oder Edelstahl hergestellt sind. Dies hat den Vorteil, dass verschiedene Leichtbau-Elemente zum Einsatz gebracht werden können, wodurch sich einerseits das Werkzeuggewicht sowie der Kraft-Hebelarm-Faktor (Unwuchtskomponente) ab Spindelnase deutlich reduzieren lässt. Dies ergibt eine deutliche Reduktion der Belastung der Spindellager im Bereich von bis zu 60%, was wiederum die Lebenserwartung erhöht bzw. die Wartungszyklen einer allfälligen Spindelrevison deutlich erhöht. Ausserdem können mit dem erfindungsgemässen Leichtbau-Werkzeug bis zu 50% höhere Drehzahlen gefahren werden, ohne dabei die Spindel im Vergleich zu den aus dem Stand der Technik beschriebenen Monoblock-Werkzeugen höher zu belasten. Eine höhere Betriebsdrehzahl ergibt höhere Schnittgeschwindigkeiten, welche für das saubere Durchtrennen des fasrigen Holzwerkstoffes von essenzieller Bedeutung sind. Dies wiederum führt beim erfindungsgemässen Werkzeug zu höheren Vorschüben und dadurch zu einer deutlichen Erhöhung der Produktivität im höheren zweistelligen Prozentbereich. Ausserdem erzeugt eine höhere Schnittgeschwindigkeit während dem Zerspanprozess tiefere Reibwiderstände, was wiederum beim erfindungsgemässen Leichtbau-Werkzeug zu höheren Standzeiten der Wendeschneiden führt. Die Leichtbau-Elemente des erfindungsgemässen Werkzeuges haben einen weiteren Kostenvorteil: Sie lassen sich auf einer Werkzeugmaschine im Gegensatz zu den aus dem Stand der Technik bekannten Monoblock-Werkzeugen, welche wegen der HSK-Schnittstelle aus einem hochfesten Stahl hergestellt werden müssen, wesentlich schneller bearbeiten.

Vorteilhaft ist die Bohrkrone mittels einer zentrischen Schraubenverbindung mit der Aufspannwelle verbunden oder verbindbar. Dies hat den Vorteil, dass die Bohrkrone zuverlässig an der Aufspannwelle montiert und rasch ausgewechselt werden kann.

Zweckmässigerweise ist die Schraubenverbindung durch eine in die Bohrkrone eingesetzte und frei drehbare Schraube und ein in der Aufspannwelle vorgesehenes, mit der Schraube korrespondierendes, axiales Schraubenloch gebildet. Dies ist eine einfache, zweckmässige und kostengünstige Konstruktion.

Vorzugsweise ist in der Bohrkrone eine axiale Bohrung vorgesehen, in welcher der Schraubenkopf der Befestigungsschraube innerhalb einer Spannbüchse frei drehbar aufgenommen ist. Dadurch kann die Bohrkrone rasch an der Aufspannwelle befestigt oder von dieser gelöst werden.

Gemäss einer vorteilhaften Ausführungsform ist der Schraubenkopf mittels einer Spannbüchse in der Bohrung gehalten. Die Spannbüchse hat neben dem Halten der Befestigungsschraube auch noch die Funktion, die Bohrkrone möglichst spielfrei mit der Aufspannwelle zu verbinden.

Zweckmässigerweise weist die Spannbüchse ein Aussengewinde auf, das mit einem Innengewinde des Bohrlochs der Bohrkrone korrespondiert. Die Spannbüchse kann in zwei Ausführungsformen, einer langen und einer kurzen Ausführung, zum Einsatz kommen.

Für die verdrehsichere Verbindung vom erstem Werkzeugkörper und Bohrkrone kommen verschiedene Techniken in Frage. Eine erste ist, die einander zugewandten Stirnenden von erstem Werkzeugkörper und Bohrkrone als komplementäre Formschlussprofile auszubilden. So können erster Werkzeugkörper und Bohrkrone an ihren einander zugewandten Stirnenden komplementäre Überlappungsprofile aufweisen, damit auf den Schneidenauflagen angeordnete Schneiden im Übergangsbereich des ersten Werkzeugkörpers und der angrenzenden Bohrkrone der axial aufeinanderfolgenden (Wende-)Schneidenbahnen überlappen können.

Eine andere Ausführungsform sieht zwischen dem ersten Werkzeugkörper und der Aufspannwelle eine erste Verdrehsicherung vor. Die erste Verdrehsicherung kann doppelt ausgeführt sein, beispielsweise durch in der Aufspannwelle und im ersten Werkzeugkörper vorgesehene und miteinander zusammenwirkende erste Keilbahnen und einem ersten Keil sowie einer korrespondierenden zweiten Keilbahn und einem zweiten Keil realisiert sein.

Vorteilhaft ist zwischen dem ersten Werkzeugkörper und der Bohrkrone eine zweite Verdrehsicherung ausgebildet. Diese kann durch im ersten Werkzeugkörper und der Bohrkrone vorgesehene und miteinander zusammenwirkende Stiftlöcher und einem Stift realisiert sein.

Die als Verdrehsicherung dienenden Stifte sind auf der stirnseitigen Innenseite der Bohrkrone vorzugsweise derart positioniert, dass sie eine drehwinkelmäßige relative Positionierung der aneinandergrenzenden axialen Segmente derart formschlüssig festlegen, daß die wendelförmigen (Wende-)Schneidenbahnen mit ihren zugeordneten Spannuten in diesem Übergangsbereich an der Schnittstelle zwischen dem ersten Werkzeugkörper und der Bohrkrone fließend ineinander übergehen.

Vorteilhaft ist zwischen der Spannbüchse und der Aufspannwelle ine dritte Verdrehsicherung vorgesehen. Die dritte Verdrehsicherung kann durch in der Spannbüchse und in der Aufspannwelle vorgesehene und miteinander korrespondierende zweite Keilbahnen und zweite Keile realisiert sein.

Vorteilhaft ist das zweite Ende der Aufspannwelle verjüngt, und die Spannbüchse in einer langen Ausführungsform überlappt mit dem verjüngten Ende. Dies hat den Vorteil, dass die Spannbüchse im Wesentlichen spielfrei auf der Aufspannwelle montierbar ist und sich im Übrigen zwischen dem ersten Werkzeugkörper und der Aufspannwelle eine weitere Verdrehsicherung realisieren lässt. Für diesen Fall können die zweiten Keilbahnen am verjüngten Ende der Aufspannwelle mit einem zweiten Keil vorgesehen sein.

Gemäss einer anderen bevorzugten Ausführungsform weist das zweite Ende der Aufspannwelle keine Verjüngung auf und ist im betriebsbereiten Zustand in der Bohrung der Bohrkrone aufgenommen. In dieser Ausführungsform kommt die kurze Spannbüchse zum Einsatz.

Vorteilhaft sind an der Stirnseite der Bohrkrone Schneidensitze für die Aufnahme von Wendeschneiden vorgesehen. Dies hat den Vorteil, dass das gesamte Werkzeug mit einem einheitlichen Schneidensystem mit gleich grossen Wendeschneiden ausgestattetsein kann, was wiederum die Wartungsfreundlichkeit deutlich erhöht.

Im Gegensatz zum eingangs zitierten Stand der Technik der Metallbearbeitung ist dieses erfindungsgemässe Werkzeug für das axiale Eintauchen in das zu bearbeitende Material geeignet. Und zum Stand der Technik in der Holzbearbeitung stellt diese Erfindung eine verbesserte Lösung für die Anordnung der stirnseitigen Schneiden auf der auswechselbaren Bohrkrone in dieser Weise zu Verfügung, damit die inneren Bohrschneiden das Bearbeitungsergebnis beim Fräsen in zwei Achsen (X- und/oder Y-Achse) nicht beeinträchtigen.

Zweckmässigerweise haben die Wendeschneiden mindestens zwei und vorzugsweise vier Schnittkanten und werden lediglich mittels einer Schraube mit einem einheitlichen Antrieb (z.B. Torx) in ihren Schneidenauflagen drehfest festgeschraubt.

Ein anderer unabhängiger Aspekt der Erfindung betrifft ein Werkzeug, insbesondere Fräser, zur rotierenden Bearbeitung von Holz und ähnlichen Werkstoffen mit einem zweiteiligen zylinderförmigen Werkzeugkörper mit wendelförmigen Schneidenauflagen und dazwischen wendelförmigen Spannuten und einer Aufspannwelle mit einer Schnittstelle für die drehfeste Anordnung an einer Werkzeugspindel. Dieses Werkzeug ist weiter gekennzeichnet durch eine Bohrkronenspitze mit wenigstens zwei in einem Winkel zur Werkzeugdrehachse angeordneten ersten und zweiten Schneidenauflagen an der Stirnseite, wobei eine erste innere Schneidenauflage so ausgeführt ist, dass auf dieser eine Schneide mit einem negativen Spanwinkel anordenbar ist, und eine äussere Schneidenauflage so ausgeführt ist, dass auf dieser eine Schneide mit einem positiven Spanwinkel anordenbar ist. Dabei sind die Begriffe «innere» und «äussere» im Rahmen der vorliegenden Erfindung so zu verstehen, dass die «äussere Schneidenauflage» in radialer Richtung gesehen weiter aussen liegt als die «innere Schneidenauflage». Diese Konfiguration hat den Vorteil, dass die von den «äusseren» und «inneren» Schneidenauflagen erzeugte Schnittgeometrie individuell ihrem Zweck dienend ausgerichtet werden kann. Die Stirnschneiden auf den äusseren Schneidenauflagen wirken mit den wendelförmig angeordnet Umfangsschneiden des zylindrischen Körpers zusammen. Einerseits muss sich die letzte Umfangsschneide am Ende der wendelförmig angeordneten Schneidenauflagen mit der auf der äusseren Schneidenauflage angeordneten Stirnschneide überdecken. Und andererseits ist es vorteilhaft, wenn die Stirnschneide der äusseren Schneidenauflage einen positiven Spanwinkel aufweist. So werden die Späne an der äusseren Stirnseite vom Umfang des Bohrfräsers in Richtung Zentrum gezogen. Die auf den inneren Schneidenauflagen angeordneten Stirnschneiden weisen vorteilhaft einen negativen Spanwinkel auf und ziehen somit die Späne vom Zentrum weg in Richtung des Bohrfräserumfangs.

Für den Fachmann ist klar, dass, wenn in der vorliegenden Beschreibung von Zerspanwinkeln (Span-, Keil- und Freiwinkel) die Rede ist, diese durch ein Zusammenspiel von Schneide und Schneidenauflage zustandekommen. An der Schneide selbst ist «nur» der Keilwinkel ausgebildet. Der Span- und der Freiwinkel entstehen durch die Positionierung der Schneide auf der Schneidenauflage. Um einen positiven oder negativen Spanwinkel zu erhalten, muss also die Schneidenauflage entsprechend gefertigt sein.

Eine andere vorteilhafte Ausführungsform eines Bohr- und Fräswerkzeugs sieht vor, dass die innere Schneidenauflage so ausgebildet ist, dass eine darauf angeordnete Schneide "Zahn über Mitte" anordenbar ist. Vorteilhaft steht die äussere Schneidenauflage relativ zur inneren Schneidenauflage in axialer Richtung ein bestimmtes Mass vor, vorzugsweise zwischen 0.01mm und 0.4mm und besonders bevorzugt zwischen 0.1mm und 0.2mm. Dadurch lassen sich mit diesem Werkzeug Nuten, Taschen und Fälze ausfräsen, wenn der Fräser nur in X- und/oder Y-Richtung verfahren wird, ohne dass die inneren Schneiden dabei zum Einsatz kommen.Diese Anordnung der Schneiden an der Bohrkronenspitze hat den Vorteil, dass das Werkzeug nicht nur zum Bohrfräsen, sondern auch zum Nut- und Taschenfräsen sowie Fügen und Fälzen eingesetzt werden kann, ohne dass das Werkzeug für die verschiedenen Bearbeitungsarten gewechselt werden muss. Es ist somit ein Universalwerkzeug für die Bearbeitung im Elementbau. Ein weiterer Vorteil ist, dass ein einheitliches Schneidenkonzept mit mindestens zwei Schnittkanten pro Wendeschneide zur Anwendung kommt. Dies erlaubt eine individuelle Einstellung der Schnittgeometrie pro Wendeschneide. Ausserdem ist ein Fräswerkzeug mit einem einheitlichen Wendeschneiden-System wartungsfreundlicher als ein Werkzeug mit Wendeschneiden und einer stirnseitigen Profilschneiden-Lösung. Ein weiterer Vorteil ist, dass alle Wendeschneiden mittels einer Schraube mit einem einheitlichen Antrieb (z.B. Torx) in ihren Schneidenauflagen drehfest festgeschraubt werden können.

Gemäss einer vorteilhaften Ausführungsform dient mindestens eine der stirnseitigen Schneidenauflagen der Aufnahme einer rhombusförmigen Schneide. Rhombusförmige Schneiden haben den Vorteil, dass sie in ihrer Breite schmal gehalten werden können und dabei eine längere Schneidkante offerieren.

Zweckmässigerweise sind zwei äussere Schneidenauflagen und wenigstens eine innere Schneidenauflage vorgesehen. Letztere ist vorzugsweise Zahn über Mitte angeordnet, d.h. überstreicht das Zentrum des Bohrfräsers. Bei sehr engen Platzverhältnissen, d.h. geringen Werkzeugdurchmessern, kann auch auf eine äussere Schneidenauflage reduziert werden.

Das erfindungsgemässe Werkzeug ist vorzugsweise als Fräser zum Nut- und Taschenfräsen sowie Fälzen, Fügen und Bohrfräsen verwendbar, insbesondere zur Herstellung von Bohrungen mit einer Helix-Verfahrbewegung oder zum Eintauchen in einer Rampe für das Fräsen von geschlossenen Nuten sowie taschenförmigen Ausnehmungen.

Ausführungsbeispiele der Erfindung werden nun unter Bezugnahme auf die nachfolgenden Figuren 1 bis 14 näher im Detail beschrieben. Es zeigt:
- Figur 1:: Eine erste Ausführungsform eines erfindungsgemässen Werkzeugs in Gestalt eines Bohrfräsers mit einer Aufspannwelle, einem ersten grossen Werkzeugkörper und einem zweiten, die Bohrkrone bildenden kleinen Werkzeugkörper in der Seiteinansicht;
- Figur 2:: Das Werkzeug von Fig. 1, wobei ein vorderer Teil des Bohrfräsers im Schni gezeigt ist;
- Figur 3:: Die Aufspannwelle, den ersten und zweiten Werkzeugkörper sowie eine Spannbüchse in einer langen Ausführungsform mit Verbindungsschraube in der Seitenansicht;
- Figur 4:: Den ersten Werkzeugkörper in perspektivischer Ansicht;
- Figur 5:: Die Bohrkrone mit eingeschraubter langer Spannbüchse und Verbindungsschraube im Schnitt;
- Figur 6: Den Gegenstand von Fig. 5 in perspektivischer Ansicht;
- Figur 7:: Das Werkzeug von Figur 1 in perspektivischer Ansicht, zusammen mit eine vergrösserten Detailansicht, wobei Teile des ersten Werkzeugkörpers zwecks besserer Veranschaulichung weggeschnitten sind;
- Figur 8:: Eine zweite Ausführungsform eines erfindungsgemässen Werkzeugs mit einer Aufspannwelle, einem ersten Werkzeugkörper, einer Bohrkrone und einer Verbindungsschraube mit Spannbüchse in einer kurzen Ausführungsform in der Seiteinansicht;
- Figur 9:: Das Werkzeug von Fig. 8 im zusammengebauten Zustand (oben) und die Bohrkrone mit eingesetzter kurzer Spannbüchse und Verbindungsschraube im Schnitt (unten);
- Figur 10:: Das Werkzeug von Fig. 8 mit der unteren Hälfte in der Schnittdarstellung und die Bohrkrone mit eingesetzter kurzer Spannbüchse und Verbindungsschraube in perspektivischer Ansicht (unten);
- Figur 11:: Die Bohrkrone eines Fräswerkzeugs mit einem Durchmesser von ungefähr 80mm und mit vier an der Stirnseite der Bohrkrone vorgesehenen Wendeschneiden in perspektivischer Ansicht;
- Figur 12:: Eine Draufsicht auf die Bohrkrone von Fig. 11;
- Figur 13:: Eine Draufsicht auf die Spitze eines Bohrfräsers mit einem Durchmesser vo ungefähr 100mm mit einer Detailansicht des zentralgen Bereichs der Bohrkrone; und
- Fig. 14:: Eine Draufsicht auf die Bohrkronenspitze eines Bohrfräsers mit einem Durchmesser von ungefähr 60mm.

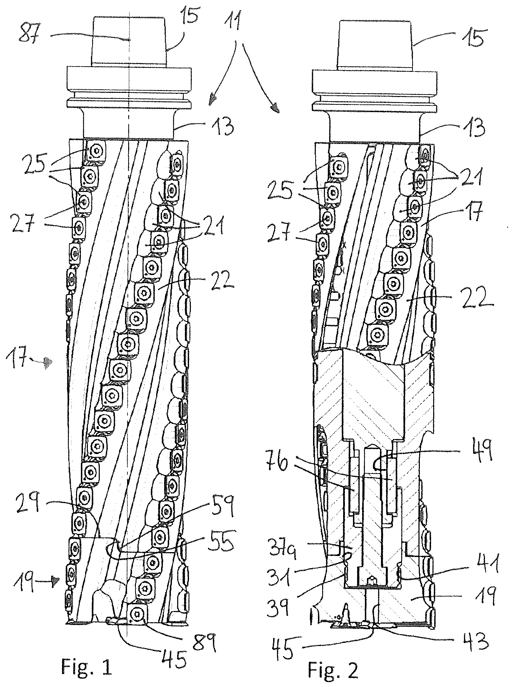

In den Figuren 1 bis 7 ist ein erfindungsgemässes Werkzeug 11 zur rotierenden Bearbeitung von Holz und ähnlichen Werkstoffen gezeigt. Das erfindungsgemässe Werkzeug 11 umfasst eine Aufspannwelle 13 mit einer Schnittstelle 15 für den Anschluss an die Spindel einer Werkzeugmaschine, einen ersten Werkzeugkörper 17, der sich an die Schnittstelle anschliesst, und einen zweiten Werkzeugkörper, der in axialer Richtung nahtlos an den ersten Werkzeugkörper anschliest und als auswechselbare Bohrkrone 19 ausgebildet ist.

Am Umfang des Werkzeugs ist eine Vielzahl von Schneidenauflagen 21 in wendelförmig verlaufenden Bahnen 22 und im Abstand voneinander angeordnet. Zwischen benachbarten Bahnen 22 von Schneidenauflagen erstrecken sich ebenfalls den Schneidenauflagen 21 zugeordnete wendelförmig verlaufende Spannnuten 23. An den Schneidenauflagen 21 sind Wendeschneiden 25 mit vier Schneidkanten mit Hilfe einer Schraube 27 auswechselbar befestigbar. Die auf einer wendelförmigen Bahn 22 angeordneten Wendeschneiden 25 sind jeweils auf Lücke einer in Drehrichtung vorauseilenden Reihe von Wendeschneiden angeordnet, d.h. die Wendeschneiden sind derart axial versetzt zueinander angeordnet, daß eine Wendeschneide 25 einer in Drehrichtung nachfolgenden Reihe immer eine Lücke zwischen zwei axial benachbarten Wendeschneiden der in Drehrichtung vorauslaufenden Reihe überdeckt.

Erfindungsgemäss ist die Bohrkrone 19 auswechselbar an der Aufspannwelle 13 anordenbar. Zu diesem Zweck weist die Bohrkrone 19 an der Stirnseite 29, die dem ersten Werkzeugkörper 17 zugewandt ist, eine axiale Bohrung 31 auf, in welcher der Schraubenkopf 33 einer Befestigungsschraube 35 aufnehmbar ist. Der Schraubenkopf 33 ist mittels einer Spannbüchse 37a in der Bohrung in axialer Richtung 31 fixiert, sonst aber frei drehbar. Die Spannbüchse 37a weist an einem Ende ein Aussengewinde 39 auf, das mit einem in der Bohrung 31 vorgesehenen Innengewinde 41 korrespondiert. Die Bohrung 31 ist über eine Zugangsbohrung 43 von der Bohrkronenspitze 45 her zugänglich, damit die Befestigungsschraube 35 mit Hilfe eines Antriebes festgedreht oder gelöst werden kann. Üblicherweise ist als Befestigungsschraube 35 eine Innensechsrundschraube eingesetzt, die sich mit einem Innensechsrundschlüssel (Torx) über die Zugangsbohrung 43 erreichen lässt.

Beim Festdrehen der Befestigungsschraube 35 werden die sich zugewandten Stirnseiten 29 und 55 von Bohrkrone 19 und erstem Werkzeugkörper 17 aufeinander gepresst. Dies hat den grossen Vorteil, dass die zentrisch klemmende Kraft an der äusseren Peripherie der Verbindungsstelle angreift und dadurch die radiale Steifigkeit des mehrteiligen Werkzeuges deutlich verbessert wird.

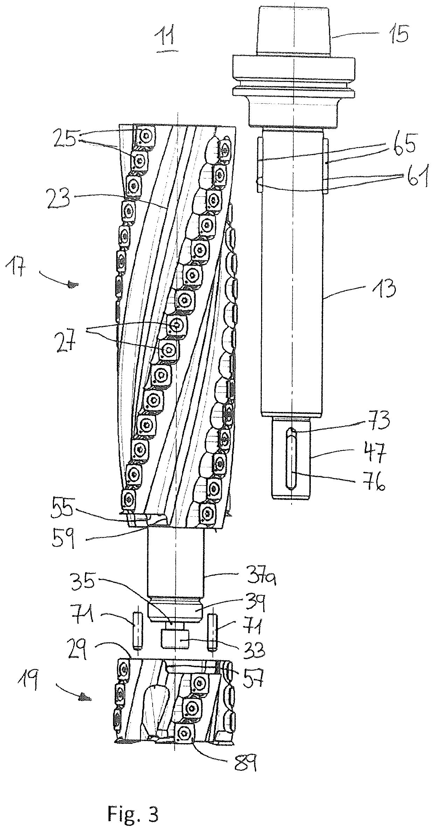

Gemäss der ersten Ausführungsform hat die Aufspannwelle 13 ein verjüngtes Ende 47, in welchem ein axiales Schraubenloch 49 für die Aufnahme des Schraubengewindes der Befestigungsschraube 35 vorgesehen ist (Fig. 3). Zur Befestigung der Bohrkrone 19 wird diese mittels der Befestigungsschraube 35 an der Aufspannwelle 13 festgeschraubt. Die Spannbüchse 37a in ihrer langen Ausführungsform ragt mit dem hinteren Teil 53 aus der Bohrkrone 19 heraus und nimmt das Ende des verjüngten Teils 47 der Aufspannwelle in sich auf.

Damit die wendelförmigen Bahnen 22 mit den Schneidenauflagen 21 fliessend ineinander übergehen, sind an den einander zugewandten Stirnseiten 29 und 55 von Bohrkrone 19 und erstem Werkzeugkörper 17 miteinander in Drehrichtung zusammenwirkende und ineinandergreifende Überlappungsprofile 57, 59 vorgesehen.

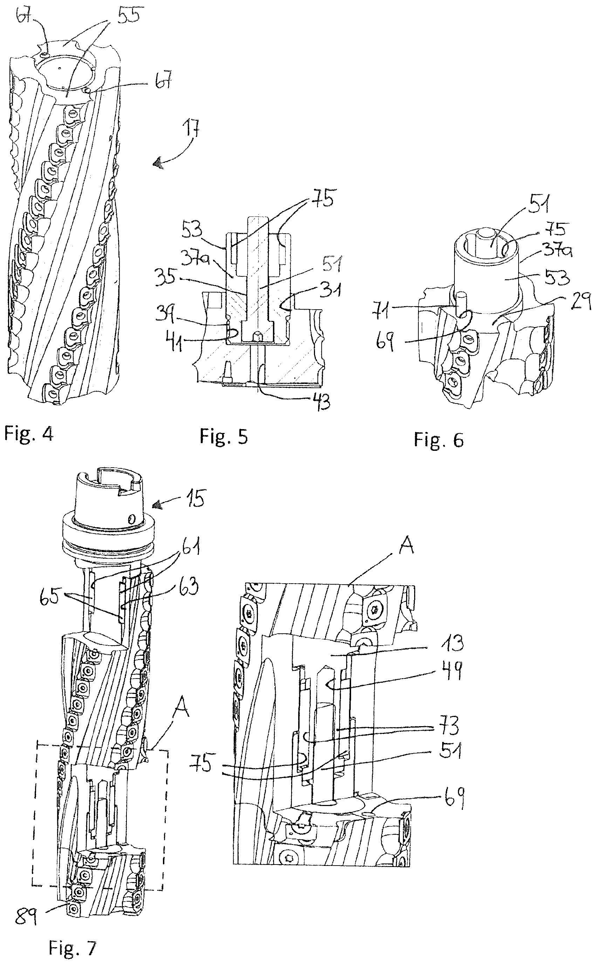

Der erste Werkzeugkörper 17 ist ausserdem mit der Aufspannwelle 13 mittels einander korrespondierender Doppelkeilbahnen 61, 63, in denen jeweils ein Keil 65 eingesetzt ist, drehfest miteinander verbunden (Fig. 7).

Die Bohrkrone 19 und der erste Werkzeugkörper 17 sind wiederum mittels einander korrespondierender Stiftlöcher 67, 69, die in den Stirnseiten 29, 55 ausgebildet sind, und Stiften 71 drehfest miteinander verbunden (Fig. 3 bis 7). Ausserdem dient diese Verdrehsicherung gleichzeitig zur relativen drehwinkelmäßigen Positionierung des ersten Werkzeugkörpers 17 zur Bohrkrone 19, damit die Bahnen 22 mit ihren zugeordneten Spannuten 23 in diesem Übergangsbereich fliessend ineinander übergehen.

Im Weiteren sind in der ersten Ausführungsform miteinander korrespondierende Doppelkeilbahnen 73, 75 auch im verjüngten Ende 47 der Aufspannwelle 13 und in der Spannbüchse 37a vorgesehen, um diese ebenfalls mittels eines Keils 76 drehfest miteinander zu verbinden (Fig. 7).

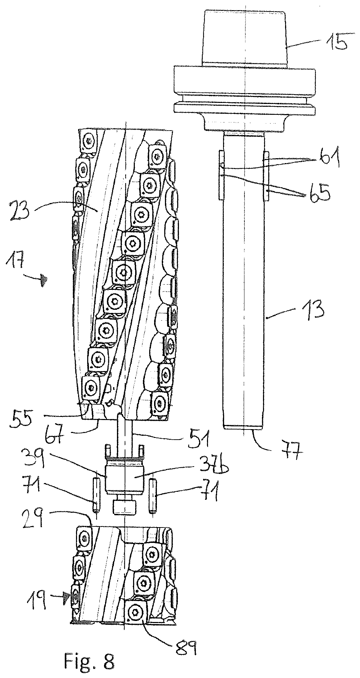

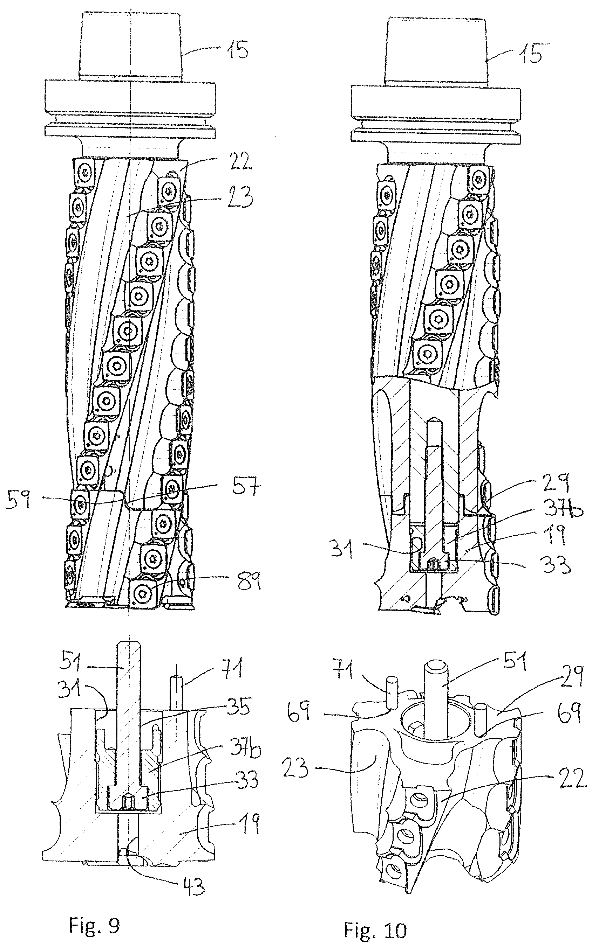

Die zweite Ausführungsform des Werkzeugs (Fig. 8 bis 10) unterscheidet sich von der ersten dadurch, dass die Spannbüchse 37b wesentlich kürzer ausgebildet und in der axialen Bohrung 31 der Bohrkrone 19 vollständig aufgenommen ist. Ausserdem weist die Aufspannwelle 13 im Unterschied zur ersten Ausführungsform über die gesamte Länge den gleichen Durchmesser auf und greift mit dem Ende der Aufspannwelle 77 in die axiale Bohrung 31 der Bohrkrone 19 ein. Der Innendurchmesser der Bohrung 31 ist so bemessen, dass im zusammengebauten Zustand eine im Wesentlichen spielfreie Zentrierung der Bohrkrone 19 resultiert.

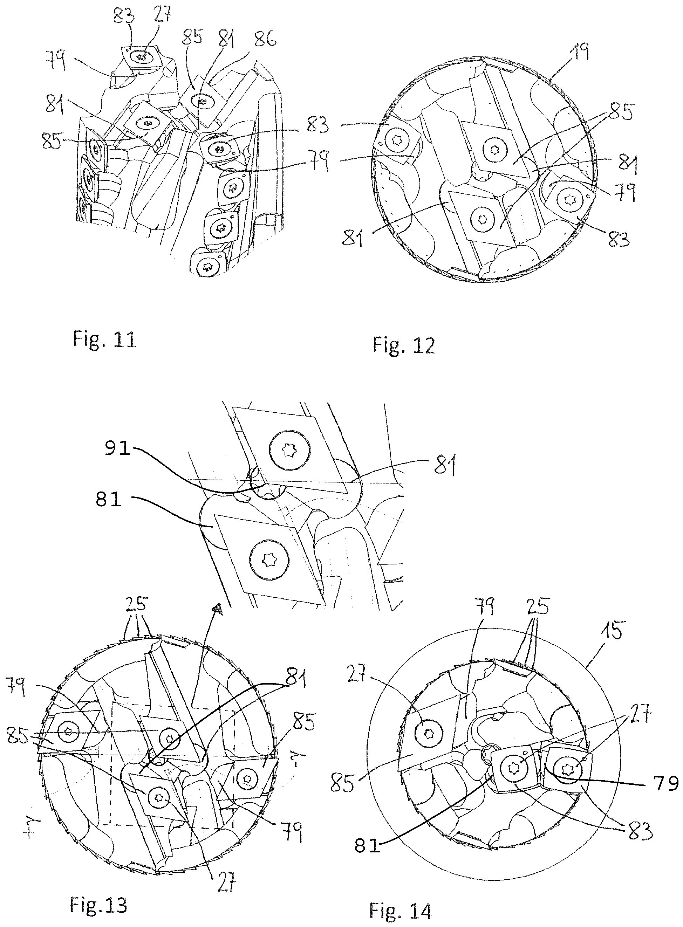

Die in den Figuren 11 und 12 gezeigte Bohrkrone 19 zeichnet sich dadurch aus, dass an der Stirnseite insgesamt vier Schneidenauflagen 79, 81 vorgesehen sind, nämlich zwei äussere Schneidenauflagen 79 und zwei innere Schneidenauflagen 81. Auf den äusseren Schneidenauflagen 79 sind quadratische Wendeschneiden 83 mittels Schrauben 27 montiert. Die äusseren Wendeschneiden 83 können, müssen aber nicht die gleiche Dimension wie die Wendeschneiden 25 am Umfang der Werkzeugkörper 17,19 aufweisen. Die inneren Wendeschneiden 85 sind rhombusförmig und besitzen längere Schneidkanten 86 als die quadratischen Wendeschneiden 83.

Sowohl die äusseren als auch die inneren Schneidenauflagen 79, 81 sind in einem Winkel zur Rotationsachse 87 angeordnet. Der Einsatz von einzelnen Wendeschneiden an der Bohrkronenspitze 45 hat im Gegensatz zu einer Profilschneidenlösung den grossen Vorteil, dass jede Schneide individuell ausgerichtet werden kann und somit die Schnittgeometrie der inneren und äusseren Schneidenauflagen 79, 81 optimal auf ihre Funktion ausgerichtet werden können.

Beim Ausführungsbeispiel von Fig. 13 sind an der Stirnseite der Bohrkrone 45 insgesamt vier rhombusförmige Wendeschneiden 85 vorgesehen, zwei aussen an der Peripherie und zwei innen. Eine solche Konfiguration hat sich als vorteilhaft erwiesen für Bohrer mit einem Duchmesser zwischen ungefähr 80mm und 100mm.

Die inneren Schneidenauflagen 81 dienen zum Bohrfräsen und werden mit einem negativen Spanwinkel (-γ) ausgestattet. Dies hat den Vorteil, dass die Schnittrichtung von innen nach aussen verläuft und die Späne so vom Zentrum weg nach aussen direkt in die Spankanäle 23 transportiert werden. Ausserdem sind vorzugsweise die inneren Schneidenauflagen 81 in axialer Richtung gegenüber den äusseren Schneidenauflagen 79 um einige hundertstel Millimeter axial nach innen resp. in Bohrrichtung zurückversetzt. Dies hat den grossen Vorteil, dass die inneren Bohrschneiden 81 beim Fälzen oder Nut- und Taschenfräsen (Verfahrbewegung in X- und/oder Y-Richtung) nicht beansprucht werden. Dadurch wird die Einsatzdauer der inneren Schneiden 81 wesentlich verlängert bzw. sie werden nur dann beansprucht, wenn ihre Funktion auch erforderlich ist.

Die äusseren Schneidenauflagen 79 dienen zum Fälzen oder Nutenfräsen und sind mit einem positiven Spanwinkel (+γ) ausgestattet. Dies hat einerseits den Vorteil, dass die Holzfasern am Übergang zur zylindrischen Peripherie mit einer äusserst schnittigen Schnittgeometrie sauber getrennt werden können und andererseits die Späne weg von der entstehenden Holzoberfläche nach innen transportiert werden. Damit sich das Werkzeug 11 als Universalwerkzeug einsetzen lässt, müssen sich die Stirnschneiden der äusseren Schneidenauflagen 79 mit den letzten Umfangsschneiden der zylindrichen Peripherie am Ende der wendelförmigen Schneidenauflagen 89 leicht überdecken. Dies hat den Vorteil, dass sich die Holzteile nach einer Fälzbearbeitung sauber zusammenfügen lassen. Durch all die genannten Merkmale für die äusseren Schneidenauflagen 79 werden die Holzzellen am äusserst heiklen Übergang von der zylindrischen Peripherie hin zur Bohrkronenspitze 45 nicht gequetscht, was einen wesentlichen Beitrag zur qualitativen Beurteilung der gefrästen Holzoberfläche beisteuert.

Eine weitere Besonderheit des Bohrwerkzeugs von Fig. 13 ist, dass die innere Schneidenauflage 81 im Zentrum eine Anordnung der rhombusförmigen Wendeschneide 85 «Zahn über Mitte» erlaubt, d.h. die eine Spitze 91 der Wendeschneide 85 überstreicht das Zentrum des Bohrfräsers um einige wenige Zehntelmillimeter. Dadurch wird beim uniaxilen Eintauchen des Bohrfräsers eine ebene Bodenfläche erzeugt ohne dass ein zylindrischer Zapfen im Zentrum zurückbleibt.

Fig. 14 zeigt ein weiteres Ausführungsbeispiel einer Bohrkrone mit einem Durchmesser von ungefähr 60mm (± 10 mm), einer äusseren, rhombusförmigen Wendeschneide 85 und je einer inneren 81 und einer äusseren quadratischen Wendeschneiden 83. Durch die engeren Platzverhältnisse können die Schneiden an der Bohrkronenspitze 45 nicht symmetrisch angeordnet werden. Diese Anordnung hat sich besonders vorteilhaft erwiesen, weil die beiden inneren Schneiden in ihrer Lage als auch Gewicht in etwa der Gegenlage und Masse der äusseren rhombusförmigen Schneide entsprechen. Dadurch kann die Unwuchtsmasse der asymmetetrisch angeordneten Schneiden sehr gering gehalten und ein schnelles und kostengünstiges Auswuchten ermöglicht werden.

Das erfindungsgemässe Werkzeug in Gestalt eines Bohrfräsers ist zum Fälzen, Fügen und Bohrfräsen einsetzbar. Es können mit diesem vorteilhaft Bohrungen mit einer Helix-Verfahrbewegung hergestellt werden oder geschlossene Nuten und taschenförmige Ausnehmungen in einer Rampe eingefräst werden. Weil der erste Werkzeugkörper aus einem Leichtmetall wie Aluminium, Titan oder einem faserverstärkten Kunststoff, z.B. ein kohlenstoffverstärkter Kunststoff ist, können hohe Drehzahlen gefahren werden, ohne dass die Lager der Werkzeugspindel übermässig belastet werden.

Da die aus Aluminium, Titan oder Edelstahl hergestellte Bohrkrone rasch und kostengünstig ersetzt werden kann, können die Werkzeugkosten tief gehalten werden.

### Legende

- 11: Werkzeug als Bohrfräser
- 13: Aufspannwelle
- 15: Schnittstelle
- 17: erster Werkzeugkörper, Leichtbau-Werkzeug
- 19: zweiter Werkzeugkörper, Bohrkrone
- 21: Schneidenauflagen für quadratische Wendeschneiden
- 22: wendelförmige Bahnen von Schneidenauflagen
- 23: Spannuten
- 25: Wendeschneiden
- 27: Schraube
- 29: Stirnseite der Bohrkrone
- 31: axiale Bohrung der Bohrkrone
- 33: Schraubenkopf
- 35: Befestigungsschraube
- 37: Spannbüchse
- 39: Aussengewinde der Spannbüchse
- 41: Innengewinde der Bohrung 31
- 43: Zugangsbohrung
- 45: Bohrkronenspitze
- 47: verjüngtes Ende der Aufspannwelle
- 49: Schraubenloch
- 51: Schraubenschaft
- 53: hinterer Teil der Spannbüchse
- 55: Innere Stirnseite des ersten Werkzeugkörpers
- 57: Überlappungsprofil der Bohrkrone
- 59: Überlappungsprofil des ersten Werkzeugkörpers
- 61,63: Doppelkeilbahnen
- 65: Keil
- 67,69: Stiftlöcher
- 71: Stift
- 73, 75: Doppelkeilbahnen
- 76: Keil
- 77: Ende der Aufspannwelle
- 79: Äussere stirnseitige Schneidenauflage
- 81: Innere stirnseitige Schneidenauflage
- 83: Quadratische Wendeschneide an der Stirnseite
- 85: Rhombusförmige Wendeschneide an der Stirnseite
- 86: Schneidkanten der Schneide 85
- 87: Rotationsachse
- 89: Letzte Schneide am Ende der wendelförmigen Schneidenauflagen
- 91: Spitze der Wendeschneide 85

## Patentansprüche

1. Werkzeug (11), insbesondere Fräser zum Nut- und Taschenfräsen sowie Fälzen und Fügen sowie insbesondere als Bohrfräser verwendbar, zur rotierenden Bearbeitung von Holz und Werkstoffen mit ähnlichen physikalischen Eigenschaften wie Holz, mit
- einem zylinderförmigen Werkzeugkörper mit
- wendelförmig verlaufenden Bahnen (22) am zylindrischen Umfang mit im Abstand voneinander angeordneten Schneidenauflagen (22) und
- den Schneidenauflagen zugeordneten, wendelförmig verlaufenden Spannuten (23),
- einer Aufspannwelle (13) mit einer Schnittstelle (15) an einem ersten Ende für die drehfeste Anordnung an einer Werkzeugspindel,
- wobei der Werkzeugkörper einen ersten (17) und einen zweiten (19) Werkzeugkörper umfasst, und
- der erste Werkzeugkörper (17) eine axiale Durchgangsbohrung aufweist für die Aufnahme der Aufspannwelle (13), - der zylinderförmige Werkzeugkörper zweiteilig ist, **dadurch gekennzeichnet, dass**
- der zweite Werkzeugkörper (19) als Bohrkrone mit zusätzlichen stirnseitigen Schneidenauflagen (79,81) ausgebildet und mittels einer zentrischen Schraubenverbindung (35,49) drehfest mit dem ersten Werkzeugkörper (17) und der Aufspannwelle (13) verbind- und auswechselbar ist;
- die Schraubenverbindung durch eine in die Bohrkrone (19) eingesetzte und frei drehbare Befestigungsschraube (35) und ein in der Aufspannwelle (13) vorgesehenes, mit der Schraube (35) korrespondierendes, axiales Schraubenloch (49) gebildet ist,
- wobei die Bohrkrone (19) an der Stirnseite (29), die dem ersten Werkzeugkörper (17) zugewandt ist, eine axiale Bohrung (31) aufweist, in welcher der Schraubenkopf (33) der Befestigungsschraube (35) aufgenommen, und über eine Zugangsbohrung (43) von der Bohrkronenspitze (45) her zugänglich ist, damit die Befestigungsschraube (35) mit Hilfe eines Antriebes festgedreht oder gelöst werden kann.

2. Werkzeug nach Anspruch 1, **dadurch gekennzeichnet, dass** der Schraubenkopf (33) mittels einer Spannbüchse (37a;37b) in der Bohrung (31) gehalten ist.

3. Werkzeug nach Anspruch 1, **dadurch gekennzeichnet, dass** das Werkzeug als Leichtbau-Werkzeug ausgeführt ist, wobei der erste Werkzeugkörper (17) aus einem Leichtmetall oder einem faserverstärkten Kunststoff und die Bohrkrone (19) aus Aluminium oder Stahl, vorzugweise jedoch Stahl, hergestellt ist.

4. Werkzeug nach einem der vorangegangenen Ansprüche, **dadurch gekennzeichnet, dass** der erste Werkzeugkörper (17) und die Bohrkrone (19) an ihren einander zugewandten Stirnenden komplementäre Überlappungsprofile (57, 59) aufweisen, damit auf den Schneidenauflagen (22) angeordnete Schneiden im Übergangsbereich des ersten Werkzeugkörpers (17) und der angrenzenden Bohrkrone (19) der axial aufeinanderfolgenden Bahnen (22) überlappen können.

5. Werkzeug nach einem der vorangegangenen Ansprüche, **dadurch gekennzeichnet, dass** zwischen dem ersten Werkzeugkörper (17) und der Aufspannwelle (13) eine erste Verdrehsicherung (61, 63, 65 und 73, 75, 76) realisiert ist.

6. Werkzeug nach einem der vorangegangenen Ansprüche, **dadurch gekennzeichnet, dass** zwischen dem ersten Werkzeugkörper (17) und der Bohrkrone (19) eine zweite Verdrehsicherung (67, 69, 71) realisiert ist, welche gleichzeitig zur relativen drehwinkelmäßigen Positionierung des ersten Werkzeugkörpers (17) mit der Bohrkrone (19) dient, damit die Bahnen (22) mit ihren zugeordneten Spannuten (23) in diesem Übergangsbereich an der Schnittstelle zwischen dem ersten Werkzeugkörper (17) und der Bohrkrone (19) fliessend ineinander übergehen.

7. Werkzeug nach einem der vorangegangenen Ansprüche, **dadurch gekennzeichnet, dass** zwischen der Spannbüchse (37) und der Aufspannwelle (13) eine dritte Verdrehsicherung (73, 75, 76) vorgesehen ist.

8. Werkzeug nach einem der vorangegangenen Ansprüche, **dadurch gekennzeichnet, dass** das zweite Ende (47) der Aufspannwelle verjüngt ist und die Spannbüchse (37a) mit dem verjüngten Ende (47) überlappt.

9. Werkzeug nach einem der vorangegangenen Ansprüche, **dadurch gekennzeichnet, dass** das zweite Ende der Aufspannwelle (77) in die Bohrung (31) der Bohrkrone (19) ragt.

10. Werkzeug nach einem der vorangegangenen Ansprüche, **dadurch gekennzeichnet, dass** das zweite Ende der Aufspannwelle keine Verjüngung aufweist und im betriebsbereiten Zustand in der Bohrung der Bohrkrone aufgenommen ist.

11. Werkzeug nach einem der vorangegangenen Ansprüche, **dadurch gekennzeichnet, dass** die Bohrkrone (19) deutlich kürzer als der erste Werkzeugkörper (17) ist und insbesondere eine Länge zwischen ungefähr 48 und 78 mm aufweist, währenddem der erste Werkzeugkörper eine Länge zwischen ungefähr 150 und 380 mm hat.

12. Werkzeug nach einem der vorangegangenen Ansprüche, **dadurch gekennzeichnet, dass** an der Stirnseite der Bohrkrone Schneidensitze für die Aufnahme von Wendeschneiden vorgesehen sind.

13. Werkzeug (11) nach einem der vorangegangenen Ansprüche **weiter gekennzeichnet durch**
eine Bohrkronenspitze (45) mit wenigstens zwei in einem Winkel zur Werkzeugdrehachse angeordneten ersten und zweiten Schneidenauflagen (79, 81) an der Stirnseite, wobei eine erste innere Schneidenauflage (81) so ausgeführt ist, dass auf dieser eine Schneide mit einem negativen Spanwinkel anordenbar ist, und eine äussere Schneidenauflage (79) so ausgeführt ist, dass auf dieser eine Schneide mit einem positiven Spanwinkel anordenbar ist.

14. Werkzeug nach Anspruch 13, **dadurch gekennzeichnet, dass** die äussere Schneidenauflage (79) relativ zur inneren Schneidenauflage (81) in axialer Richtung ein bestimmtes Mass, vorzugsweise zwischen 0.01mm und 0.4mm und besonders bevorzugt zwischen 0.1mm und 0.2mm, vorsteht.

15. Werkzeug nach Anspruch 13 oder 14, **dadurch gekennzeichnet, dass** die erste innere Schneidenauflage (81) so ausgebildet ist, dass eine erste Schneide Zahn über Mitte anordenbar ist, und die äussere Schneidenauflage (79) an der zylindrischen Peripherie vorgesehen ist.

## Claims

1. Tool (11), in particular milling cutter for slot and pocket milling as well as for rabbeting and jointing, as well usable in particular as boring mill, for the rotating machining of wood and materials with similar physical properties such as wood, with
- a cylindrical tool body with
- helical passes (22) at the cylindrical periphery with blade holders (22) spaced from each other and
- helical chip flutes (23) associated to the blade holders,
- a mandrel (13) with an interface (15) at a first end for the non-rotatable arrangement on a tool spindle,
- wherein the tool body comprises a first (17) and a second (19) tool body and
- the first tool body (17) has an axial passage bore for receiving the mandrel (13),
- the second tool body (19) is configured as a drill bit with additional front-sided blade holders (79, 81) and can be connected and exchanged by means of central screw connection (35, 49) non-rotatably with the first tool body (17) and the mandrel (13),
- the cylindrical tool body is in two parts,
**characterized in that**
- the screw connection is formed by a fixing screw (35) inserted into the drill bit (19) and free rotatable and an axial screw hole (49) provided in the mandrel (13), corresponding to the screw (35),
- wherein the drill bit (19) has an axial bore (33) on the front side (29) that is facing the first tool body (17), bore in which the screw head (33) of the fixing screw (35) is received and is accessible by an access bore (43) from the drill bit tip (45) so that the fixing screw (35) can be tightened or loosened by means of a drive.

2. Tool according to claim 1, **characterized in that** the screw head (33) is held in the bore (31) by means of a clamping bush (37a, 37b).

3. Tool according to claim 1, **characterized in that** the tool is designed as a lightweight tool, wherein the first tool body (17) is made of a light metal or a fiber-reinforced plastic material and the drill bit (19) of aluminum or steel, preferably however made of steel.

4. Tool according to one of the preceding claims, **characterized in that** the first tool body (17) and the drill bit (19) have complementary overlapping profiles (57, 59) at their facing front ends so that blades arranged on the blade holders can overlap in the transition area of the first tool body (17) and the adjacent drill bit (19) of the axially consecutive passes (22).

5. Tool according to one of the preceding claims, **characterized in that** a first anti-rotation device (61, 63, 65 and 73, 75, 76) is realized between the first tool body (17) and the mandrel (13).

6. Tool according to one of the preceding claims, **characterized in that** a second anti-rotation device (67, 69, 71) is realized between the first tool body (17) and the drilling bit (19) that simultaneously serves for the relative positioning of the angle of rotation of the first tool body (17) with the drilling bit (19) so that the passes (22) blend seamlessly with their associated chip flutes (23) in this transition area at the interface between the first tool body (17) and the drill bit (19).

7. Tool according to one of the preceding claims, **characterized in that** a third anti-rotation device (73, 75, 76) is provided between the clamping bush (37) and the mandrel (13).

8. Tool according to one of the preceding claims, **characterized in that** the second end (47) of the mandrel is tapered and the clamping bush (37a) overlaps with the tapered end (47).

9. Tool according to one of the preceding claims, **characterized in that** the second end of the mandrel (77) penetrates into the bore (31) of the drill bit (19).

10. Tool according to one of the preceding claims, **characterized in that** the second end of the mandrel is not tapered and is received in working condition in the bore of the drill bit.

11. Tool according to one of the preceding claims, **characterized in that** the drill bit (19) is significantly shorter than the first tool body (17) and has in particular a length between approximately 48 and 78 mm, while the first tool body has a length between approximately 150 and 380 mm.

12. Tool according to one of the preceding claims, **characterized in that** blade seats are provided on the front side of the drill bit for receiving indexable blades.

13. Tool (11) according to one of the preceding claims,
further **characterized by**
a drill bit tip (45) with at least two first and second blade holders (79, 81) placed at an angle with the tool axis of rotation on the front side, wherein a first inner blade holder (81) is designed in such a manner that a blade with a negative rake angle can be arranged thereon and an outer blade holder (79) is designed in such a manner that a blade with a positive rake angle can be arranged thereon.

14. Tool according to claim 13, **characterized in that** the outer blade holder (79) projects relative to the inner blade holder (81) in the axial direction by a certain amount, preferably between 0,01 mm and 0,4 mm and particularly preferably between 0,1 mm and 0,2 mm.

15. Tool according to claim 13 or 14, **characterized in that** the first inner blade holder (81) is realized in such a manner that a first blade can be arranged tooth over center and the outer blade holder (79) is provided at the cylindrical periphery.

## Revendications

1. Outil (11), en particulier fraise pour fraiser des rainures et des poches ainsi que pour plier et assembler ainsi qu'utilisable en particulier en tant que fraise à aléser, pour le travail rotatif du bois et de matériaux avec des propriétés physiques similaires comme le bois, avec
- un corps d'outil cylindrique avec
- des bandes hélicoïdales (22) sur la périphérie cylindrique avec des supports de lame (22) disposés espacés les uns des autres et
- des goujures (23) hélicoïdales associées aux supports de lame,
- un arbre de serrage (13) avec une interface (15) à une première extrémité pour l'agencement fixe en rotation sur une broche porte-outil,
- cependant que le corps d'outil comprend un premier (17) et un second corps d'outil (19 et
- le premier corps d'outil (17) présente un alésage de passage axial pour recevoir l'arbre de serrage (13),
- le second corps d'outil (19) est configuré comme un trépan avec des supports de lame frontaux supplémentaires (79, 81) et peut être relié et échangé au moyen d'un assemblage vissé central (35, 49) fixe en rotation avec le premier corps d'outil (17) et l'arbre de serrage (13),
- le corps d'outil cylindrique est en deux parties,
**caractérisé en ce que**
- l'assemblage vissé est formé par une vis de fixation (35) mise en place dans le trépan (19) et libre en rotation et un trou de vis axial (49) correspondant à la vis (35), prévu dans l'arbre de serrage (13),
- cependant que le trépan (19) présente, sur la face frontale (29) qui est tournée vers le premier corps d'outil (17), un alésage axial (31) dans laquelle la tête de vis (33) de la vis de fixation (35) est logée et est accessible par un alésage d'accès (43) à partir de la pointe du trépan (45) pour que la vis de fixation (35) puisse être vissée ou desserrée à l'aide d'un entraînement.

2. Outil selon la revendication 1, **caractérisé en ce que** la tête de vis (33) est maintenue dans l'alésage (31) au moyen d'une douille de serrage (37a, 37b).

3. Outil selon la revendication 1, **caractérisé en ce que** l'outil est réalisé comme un outil de conception légère, cependant que le premier corps d'outil (17) est fait en un métal léger ou une matière plastique renforcée par des fibres et le trépan (19) en aluminium ou en acier, de préférence cependant en acier.

4. Outil selon l'une des revendications précédentes, **caractérisé en ce que** le premier corps d'outil (17) et le trépan (19) présentent, à leurs extrémités frontales tournées l'une vers l'autre, des profils de chevauchement complémentaires (57, 59) pour que des lames placées sur les supports de lame (22) puissent se chevaucher dans la zone de transition du premier corps d'outil (17) et du trépan adjacent (19) des bandes (22) consécutives dans le sens axial.

5. Outil selon l'une des revendications précédentes, **caractérisé en ce qu'**un premier blocage anti-rotation (61, 63, 65 et 73, 75, 76) est réalisé entre le premier corps d'outil (17) et l'arbre de serrage (13).

6. Outil selon l'une des revendications précédentes, **caractérisé en ce qu'**un second blocage anti-rotation (67, 69, 71) est réalisé entre le premier corps d'outil (17) et le trépan (19) qui sert simultanément au positionnement relatif de l'angle de rotation du premier corps d'outil (17) avec le trépan (19) pour que les bandes (22) s'entremêlent de manière fluide avec leurs goujures (23) dans cette zone de transition à l'interface entre le premier corps d'outil (17) et le trépan (19).

7. Outil selon l'une des revendications précédentes, **caractérisé en ce qu'**un troisième blocage anti-rotation (73, 75, 76) est prévu entre la douille de serrage (37) et l'arbre de serrage (13).

8. Outil selon l'une des revendications précédentes, **caractérisé en ce que** la seconde extrémité (47) de l'arbre de serrage est effilée et la douille de serrage (37a) chevauche avec l'extrémité effilée (47).

9. Outil selon l'une des revendications précédentes, **caractérisé en ce que** la seconde extrémité (47) de l'arbre de serrage (77) pénètre dans l'alésage (31) du trépan (19).

10. Outil selon l'une des revendications précédentes, **caractérisé en ce que** la seconde extrémité de l'arbre de serrage ne présente pas d'effilement et est logée, en état de fonctionnement, dans l'alésage du trépan.

11. Outil selon l'une des revendications précédentes, **caractérisé en ce que** le trépan (19) est nettement plus court que le premier corps d'outil (17) et présente en particulier une longueur entre environ 48 et 78 mm tandis que le premier corps d'outil a une longueur entre environ 150 et 380 mm.

12. Outil selon l'une des revendications précédentes, **caractérisé en ce que** des logements de lame sont prévus sur la face frontale du trépan pour recevoir des lames tournantes.

13. Outil (11) selon l'une des revendications précédentes,
**caractérisé de plus par** une pointe de trépan (45) avec au moins deux premier et seconds supports de lame (79, 81) placés sur la face frontale en formant un angle avec l'axe de rotation de l'outil, cependant qu'un premier support de lame intérieur (81) est réalisé de manière telle qu'une lame avec un angle de coupe négatif peut être placé sur celui-ci et un support de lame extérieur (79) est réalisé de manière telle qu'une lame avec un angle de coupe positif peut être placé sur celui-ci.

14. Outil selon la revendication 13, **caractérisé en ce que** le support de lame extérieur (79) dépasse par rapport au support de lame intérieur (81) dans le sens axial d'une certaine dimension, de préférence entre 0,01 mm et 0,4 mm et de manière particulièrement préférée entre 0,1 mm et 0,2 mm.

15. Outil selon la revendication 13, **caractérisé en ce que** le premier support de lame intérieur (81) est configuré de telle manière qu'une première lame peut être placée dent au-dessus du milieu et le support de lame extérieur (79) est prévu à la périphérie cylindrique.
